(19) Europäisches Patentamt
European Patent Office
Office européen des brevets

(11) **EP 2 284 544 B1**

(12) **EUROPÄISCHE PATENTSCHRIFT**

(45) Veröffentlichungstag und Bekanntmachung des Hinweises auf die Patenterteilung:
**09.05.2012 Patentblatt 2012/19**

(51) Int Cl.:
*G01P 3/46* *(2006.01)*    *G01P 3/48* *(2006.01)*
*H02P 6/16* *(2006.01)*    *H02P 7/00* *(2006.01)*
*H02P 6/18* *(2006.01)*

(21) Anmeldenummer: **10170728.9**

(22) Anmeldetag: **26.07.2010**

(54) **Verfahren und Vorrichtung zur sensorlosen Drehzahlmessung eines Elektromotors**

Method and device for measuring the rotational speed of an electric motor without sensors

Procédé et dispositif de mesure sans capteur de la vitesse de rotation d'un moteur électrique

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **04.08.2009 DE 102009028216**

(43) Veröffentlichungstag der Anmeldung:
**16.02.2011 Patentblatt 2011/07**

(73) Patentinhaber: **Robert Bosch GmbH**
**70442 Stuttgart (DE)**

(72) Erfinder: **Fricker, David**
**67240, Oberhoffen Sur Moder (FR)**

(56) Entgegenhaltungen:
**EP-A2- 1 107 446    EP-A2- 1 873 901**
**JP-A- 2004 173 360    US-A- 5 696 871**

**Beschreibung**

Technisches Gebiet

Die Erfindung betrifft ein Verfahren zur sensorlosen Drehzahlermittlung eines Elektromotors, insbesondere eines bürstenkommutierten Gleichstrommmotors.

Stand der Technik

Zur Drehzahlermittlung eines Elektromotors werden üblicherweise mit dem Läufer des Elektromotors gekoppelte Lagesensoren verwendet. Diese Lagesensoren können beispielsweise einen Hall-Sensor umfassen, der bei Rotation des Motors ein Wechselspannungssignal ausgibt, dessen Frequenz die Drehzahl des Elektromotors anzeigt. Auch andere Lagesensoren, die andere physikalische Prinzipien anwenden, sind aus dem Stand der Technik bekannt.

Wenn aus einem Mangel an Bauraum die Anordnung eines Lagesensors im bzw. am Elektromotor nicht oder nur mit erhöhtem Aufwand möglich ist, wird auf eine sensorlose Drehzahlermittlung zurückgegriffen. JP-A-2004 173360 und EP-A2-1 873 901 beschreiben beispielsweise solche Verfahren. Dabei wird in der Regel der über die Versorgungsleitung fließende Motorstrom ausgewertet. Bei bürstenkommutierten Gleichstrommotoren weist der Stromverlauf auf den Versorgungsleitungen Stromripple auf, d.h. Stromschwankungen, die aus der Kommutierung der Rotorwicklung resultieren und deren Frequenz proportional zur Drehzahl des Gleichstrommotors ist.

Die Messung der Stromripple auf den Versorgungsleitungen ist jedoch aufgrund des dort fließenden vergleichsweise hohen Versorgungsstroms nicht einfach zu detektieren und kann durch Störungen seitens der Energieversorgung, beispielsweise durch Spannungsschwankungen und dergleichen, beeinflusst werden.

Desweiteren müssen die Stromripple auf den Versorgungsleitungen zugelassen werden und nicht durch etwaige Filterschaltungen herausgefiltert werden, um diese zur Drehzahlbestimmung verwenden zu können. Dies führt, insbesondere in Kraftfahrzeugen, zu einer Belastung des Versorgungsnetzes mit Störsignalen.

Es ist daher Aufgabe der vorliegenden Erfindung, ein robusteres Verfahren zur sensorlosen Drehzahlermittlung zur Verfügung zu stellen, das nicht auf der Auswertung von Stromripples basiert und bei dem Belastungen des Versorgungsnetzes vermieden werden können. Weiterhin ist es Aufgabe der Erfindung, dass das Verfahren zur sensorlosen Drehzahlermittlung die Drehzahl nur mit einem geringen rechnerischen Aufwand ermitteln kann.

Offenbarung der Erfindung

Diese Aufgabe wird durch das Verfahren zum Ermitteln einer Drehzahl eines bürstenkommutierten Gleichstrommotors gemäß Anspruch 1 sowie durch die Vorrichtung gemäß dem nebengeordneten Anspruch gelöst.

Weitere vorteilhafte Ausgestaltungen sind in den abhängigen Ansprüchen angegeben.

Gemäß einem ersten Aspekt ist ein Verfahren zur Bestimmung einer Drehzahlangabe eines Gleichstrommotors vorgesehen. Das Verfahren umfasst die folgenden Schritte:

- Ansteuern des Gleichstrommotors mit einer pulsweitenmodulierten Ansteuerung, wobei innerhalb einer Periodendauer der Pulsweitenmodulation mehrere Motorspannungen in aufeinander folgenden Zeitfenstern angelegt werden;
- jeweiliges Ermitteln einer Stromangabe, die den Strom durch den Gleichstrommotor angibt, zu einem bestimmten Zeitpunkt in einem Zeitfenster, in dem die angelegte Motorspannung 0 Volt beträgt, oder zu jeweils einem bestimmten Zeitpunkt in mehreren der Zeitfenster, in denen die Summe der während der Zeitfenster angelegten Motorspannungen 0 Volt beträgt;
- jeweiliges Ermitteln einer Stromgradientenangabe, die den zeitlichen Stromgradienten zu den bestimmten Zeitpunkten in dem einen oder den mehreren Zeitfenstern angibt;
- Ermitteln einer Angabe zu einer induzierten Spannung als die Drehzahlangabe anhand der einen oder mehreren Stromangaben und der einen oder mehreren Stromgradientenangaben mit Hilfe von bereitgestellten Angaben über einen Innenwiderstand und einer Wicklungsinduktivität einer Läuferwicklung des Gleichstrommotors.

Eine Idee der Erfindung basiert darauf, die induzierte Spannung zu ermitteln, die im Wesentlichen proportional zur Drehzahl ist. Die induzierte Spannung kann in der Regel bei Kenntnis der angelegten Versorgungsspannung, des durch die Rotorwicklung fließenden Stroms, der Innenwiderstand der Rotorwicklung, der Ableitung des durch die Rotorwicklung fließenden Stroms und der Wicklungsinduktivität der Rotorwicklung in einfacher Weise ermittelt werden.

Eine Angabe des durch die Rotorwicklung fließenden Stroms und eine entsprechende Angabe dessen zeitlicher Ableitung sind wesentlich einfacher zu bestimmen als eine Frequenz von Stromripplen geringer Amplitude auf einem im Vergleich dazu sehr hohen Motorstrom. Somit hat das vorliegende Verfahren zum Bestimmen der Drehzahl des Gleichstrommotors insbesondere bei mit Störsignalen beaufschlagten Versorgungsspannungen den Vorteil einer höheren Robustheit.

Es ist grundsätzlich bekannt, dass die induzierte Spannung proportional zur Drehzahl eines Gleichstrommotors ist. Diese lässt sich aus den oben angegebenen Größen bestimmen. Jedoch ist in der Regel die Versorgungsspannung als Spannung in Volt angegeben, da diese von außen an das Motorsystem angelegt wird. Dagegen werden oftmals ein Strom und ein Stromgradient mit Hilfe einer repräsentierenden Größe dargestellt und ermittelt. Z.B. steht in einem Motorsystem eine Angabe über einen Strom oftmals digitalisiert und/oder als Spannungswert zur Verfügung, wobei eine direkte Umrechnungsfunktion in einen Strom mit der Einheit Ampere nicht immer vorliegt oder aufwändig zu bestimmen ist. Z.B. ist es häufig ausreichend einen Stromwert durch eine Messspannung, die proportional zu dem zu messenden Strom ist, darzustellen, ohne eine Umrechnung vorzunehmen.

Im vorliegenden Fall, in dem eine Versorgungsspannung, die einer anlegbaren Motorspannung entspricht oder aus der eine Motorspannung abgeleitet wird, als Spannungswert bereitgestellt wird, ist es notwendig die exakten Ströme und Parameter der Läuferwicklung zu kennen, um aus der physikalischen Beziehung die induzierte Spannung errechnen zu können. Es wird daher vorgeschlagen, die Ströme und Stromgradienten in einem oder mehreren Zeitfenstern zu bestimmen, in denen z.B. bei einer pulsweitenmodulierten Ansteuerung nacheinander verschiedene Motorspannungen angelegt werden. Die Zeitfenster werden so gewählt, dass die Summe der während der Zeitfenster angelegten Motorspannungen 0 ist. Bei Messungen in mehreren Zeitfenstern können in dem entstehenden Gleichungssystem die einzelnen Gleichungen addiert werden, so dass die Motorspannungsanteile herausfallen und die induzierte Spannung als Maß der Drehzahl nur noch mit Hilfe der Angaben des durch die Rotorwicklung fließenden Stroms, der Innenwiderstand der Rotorwicklung, der Angabe des Gradienten des durch die Rotorwicklung fließenden Stroms und der Wicklungsinduktivität der Rotorwicklung bestimmbar ist.

Weiterhin kann eine Stromangabe und eine Stromgradientenangabe in einem Zeitfenster ermittelt werden, in dem eine Motorspannung von 0 Volt angelegt ist.

Alternativ können zwei Stromangaben und zwei Stromgradientenangaben in zwei verschiedenen Zeitfenstern ermittelt werden, wobei in einem ersten der Zeitfenster eine Motorspannung in Höhe einer Versorgungsspannung und in einem zweiten Zeitfenster eine Motorspannung in Höhe einer negativen Versorgungsspannung angelegt sind.

Gemäß einem weiteren Aspekt ist eine Vorrichtung zur Bestimmung einer Drehzahlangabe eines Gleichstrommotors vorgesehen. Die Vorrichtung umfasst:

- einen Gleichstrommotor;
- eine Treiberschaltung zum Bereitstellen von Motorspannungen in aufeinander folgenden Zeitfenstern
- ein Steuergerät zum Ansteuern der Treiberschaltung mit einer pulsweitenmodulierten Ansteuerung, so dass innerhalb einer Periodendauer der Pulsweitenmodulation mehrere Motorspannungen in aufeinander folgenden Zeitfenstern angelegt werden;
- eine Einrichtung zum jeweiliges Ermitteln einer Stromangabe, die den Strom durch den Gleichstrommotor angibt, zu einem bestimmten Zeitpunkt in einem Zeitfenster, in dem die angelegte Motorspannung 0 Volt beträgt, oder zu jeweils einem bestimmten Zeitpunkt in mehreren der Zeitfenster, in denen die Summe der während der Zeitfenster angelegten Motorspannungen 0 Volt beträgt;
- eine Einrichtung zum jeweiliges Ermitteln einer Stromgradientenangabe, die den Stromgradienten zu den bestimmten Zeitpunkten in dem einen oder den mehreren Zeitfenstern angibt;
- eine Einrichtung zum Ermitteln einer Angabe zu einer induzierten Spannung als eine Angabe zu der Drehzahl anhand der einen oder mehreren Stromangaben und der einen oder mehreren Stromgradientenangaben mit Hilfe von bereitgestellten Angaben über einen Innenwiderstand und einer Wicklungsinduktivität einer Läuferwicklung des Gleichstrommotors.

Weiterhin kann die Einrichtung zum jeweiliges Ermitteln einer Stromangabe ausgebildet sein, um die Stromangaben unmittelbar am Ausgang der Treiberschaltung oder am Eingang der Treiberschaltung zum Anlegen der Versorgungsspannung zu erfassen.

Gemäß einem weiteren Aspekt ist ein Computerprogrammprodukt vorgesehen, das ein Computerprogramm enthält, das, wenn es auf einer Datenverarbeitungseinheit ausgeführt wird, das obige Verfahren durchführt.

Kurzbeschreibung der Zeichnungen

Bevorzugte Ausführungsformen werden nachfolgend anhand der beigefügten Zeichnungen näher erläutert. Es zeigen:

Figur 1     eine schematische Darstellung eines Motorsystems mit einer Vorrich- tung zum Bestimmen der Drehzahl gemäß einer ersten Ausführungs- form;

Figur 2    Diagramme für die angelegte Motorspannung, den Motorstrom sowie die Ableitung des Motorstroms nach der Zeit bei einem ersten Auswer- teverfahren ;

Figur 3    Diagramme für die angelegte Motorspannung, den Motorstrom sowie die Ableitung des Motorstroms nach der Zeit bei einem zweiten Aus- werteverfahren;

Figur 4    eine schematische Darstellung eines Motorsystems mit einer Vorrich- tung zum Bestimmen der Motordrehzahl gemäß einer weiteren Ausfüh- rungsform; und

Figur 5    Diagramme zur Darstellung der Verläufe von Motorspannung, Motor- strom und der Ableitung des Motorstroms für die Ausführungsform der Figur 4.

Gleiche Bezugszeichen kennzeichnen Elemente gleicher oder vergleichbarer Funktion.

Beschreibung von Ausführungsformen

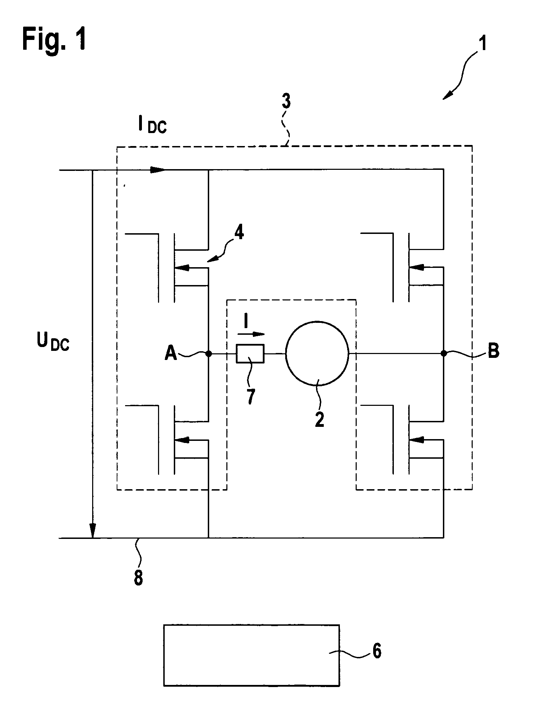

Figur 1 zeigt eine schematische Darstellung eines Motorsystems 1 mit einem Gleichstrommotor 2. Der Gleichstrommotor 2 wird mit Hilfe einer H-Brückenschaltung als Treiberschaltung 3 angesteuert. Die H-Brückenschaltung umfasst vier Leistungshalbleiterschalter in Form von Leistungstransistoren 4, wobei jeweils zwei in Serie zwischen einem hohen Versorgungspotential $V_H$ und einem niedrigen Versorgungspotential $V_L$ geschaltet sind. Die Differenz zwischen dem hohen Versorgungspotential $V_H$ und dem niedrigen Versorgungspotential $V_L$ entspricht einer Versorgungsspannung $U_{DC}$ für das Motorsystem 1. Anstelle eines Leistungstransistors 4 kann jeweils auch eine Parallelschaltung von mehreren Leistungstransistoren 4 vorgesehen sein. Die Versorgungsspannung $U_{DC}$ wird von einer Gleichspannungsquelle oder über ein Bordnetz (beispielsweise bei einem Kraftfahrzeug) bereitgestellt.

Die Leistungstransistoren 4 der Treiberschaltung 3 bilden eine H-Brückenschaltung, bei der jeweils zwei der Leistungstransistoren 4 eine Reihenschaltung bilden und an die Versorgungsspannung $U_{DC}$ angelegt sind. Die jeweils zwischen den beiden Leistungstransistoren 4 einer Reihenschaltung befindlichen Knoten A, B stellen die Ausgänge der H-Brückenschaltung dar. Diese sind mit Motoranschlüssen des Gleichstrommotors 2 verbunden und stellen die jeweils anzulegende Motorspannung bereit.

Es ist eine Steuereinheit 6 vorgesehen, die die Leistungstransistoren 4 ansteuert. Die Ansteuerung der Leistungstransistoren 4 wird so durchgeführt, dass an dem Gleichstrommotor 2 gemäß einem Pulsweitenmodulationsverfahren entweder die Versorgungsspannung $U_{DC}$ oder die negative Versorgungsspannung $-U_{DC}$ oder 0 Volt als Motorspannung angelegt wird, um durch zyklische Kombination der obigen Spannungen eine bestimmte elektrische Leistung zur Verfügung zu stellen. Durch die Pulsweitenmodulation bestimmt sich die effektiv an dem Elektromotor 2 angelegte Spannung aus dem Tastverhältnis, d.h. dem zeitlichen Verhältnis der an dem Motor während einer Pulsweitenmodulationsperiode angelegten Spannungen bezüglich einer Periodendauer der Pulsweitenmodulation.

Zur Bestimmung der Drehzahl des Gleichstrommotors 2 wird auf ein sensorloses Messverfahren zurückgegriffen. Anstatt, wie im Stand der Technik vorgesehen, Stromschwankungen auf den Versorgungsleitungen auszuwerten, deren Frequenz die Drehzahl des Rotors des Elektromotors 2 angeben kann, wird der Verlauf des regulären Motorstroms verwendet, um die induzierte Spannung zu ermitteln, die regelgemäß proportional zur Drehzahl des Elektromotors 2 ist. Es gilt:

$$U_{DC} = R * I + L * dI / dt + U_{IND},$$

mit

$$U_{IND} = k * \omega,$$

wobei R dem Innenwiderstand der Rotorwicklung, I dem Motorstrom, L der Wicklungsinduktivität des Läufers des Elektromotors $U_{IND}$ der in dem Elektromotor induzierten Spannung, k eine systemabhängige Konstante und $\omega$ der Winkel- geschwindigkeit (Drehzahlangabe) entsprechen.

Die Treiberschaltung 3 kann drei unterschiedliche Spannungen an den Gleichstrommotor 2 anlegen, nämlich $U_{DC}$, $-U_{DC}$ und 0V. Somit gilt:

$$U_{DC} = R * I_+ + L * dI_+ / dt + U_{IND}$$

$$-U_{DC} = R * I_- + L * dI_- / dt + U_{IND}$$

$$0 = R * I_0 + L \times dI_0 / dt + U_{IND},$$

wobei $I_+$ dem Motorstrom (Strom zwischen den Knoten der in Serie verschalteten Leistungsschalter 4) zu einem bestimmten ersten Zeitpunkt innerhalb des Zeitfensters, in dem die positive Motorspannung $U_{DC}$ angelegt ist, I, dem Motorstrom zu einem bestimmten zweiten Zeitpunkt innerhalb des Zeitfensters, in dem die negative Motorspannung $-U_{DC}$ angelegt ist, und $I_0$ dem Motorstrom zu einem bestimmten dritten Zeitpunkt innerhalb des Zeitfensters, in dem die Spannung von 0 Volt angelegt ist, entsprechen. Die Gradienten des jeweiligen Stroms $dI_+ / dt$, dI. /dt und $dI_0 / dt$ werden für den bestimmten ersten bis dritten Zeitpunkt ermittelt.

In dem Motorsystem 1 ist in den durch den Gleichstrommotor 2 verbundenen Knoten A, B der Treiberschaltung 3 ein Strommesselement 7 vorgesehen, das beispielsweise als Messwiderstand (Shunt) ausgebildet ist. Über dem Messwiderstand findet eine Spannungsmessung vorzugsweise mit Hilfe des Steuergeräts 6 statt. Die Spannung ist proportional zum Motorstrom. Der Motorstrom kann nun wie folgt ausgewertet werden.

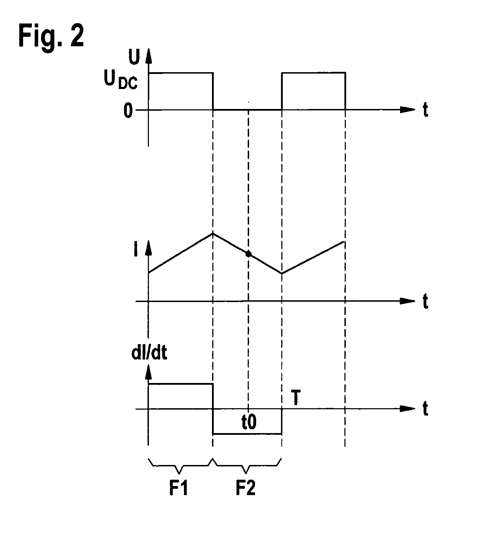

Eine erste Auswertemöglichkeit besteht darin, die induzierte Spannung direkt bei Anliegen von 0V an dem Gleichstrommotor 2 zu bestimmen. Die Verläufe der induzierten Spannung U IND, des Motorstromes I und der zeitlichen Ableitung des Motorstromes (Stromgradient) dI/dt sind in Fig. 2 schematisch dargestellt. Für die erste Auswertemöglichkeit erhält man durch Umstellen der oben genannten Formel für die induzierte Spannung $U_{IND}$:

$$U_{IND} = -R \times I_0 - L \times dI_0 / dt$$

Dazu ist es notwendig, den Motorstrom I zu dem bestimmten dritten Zeitpunkt $t_0$ zu bestimmen, zu dem die Motorspannung von 0V an den Gleichstrommotor 2 angelegt ist. Beim Betrieb mit einer Pulsweitenmodulation wird der Gleichstrommotor 2 in der Regel durch Anlegen einer Versorgungsspannung $U_{DC}$ während eines ersten Zeitfensters F1 und durch Anlegen einer Spannung von 0V während eines zweiten Zeitfensters F2 innerhalb einer Pulsweitenmodulationsperiode T angelegt. Das Anlegen erfolgt periodisch und das Verhältnis der zeitlichen Dauer des ersten Zeitfensters F1 zu der Pulsweitenmodulationsperiode T entspricht einem Tastverhältnis und ist ein Maß für die an dem Gleichstrommotor 2 bereitgestellte elektrische Leistung.

Zum Bestimmen der Drehzahl des Gleichstrommotors 2 gemäß der ersten Auswertemöglichkeit wird also zu dem bestimmten dritten Zeitpunkt $t_0$ während des zweiten Zeitfensters F2 bei Anlegen einer Motorspannung von 0V (d.h. ein Kurzschluss zwischen den Motoranschlüssen) der Strom durch den Messwiderstand 7 gemessen und weiterhin der Stromgradient des Stromflusses durch den Messwiderstand 7 zu dem bestimmten dritten Zeitpunkt innerhalb des zweiten Zeitfensters F2 gemessen. Bei bekanntem Innenwiderstand der Rotorwicklung R und der Wicklungsinduktivität L lässt sich somit eine Angabe über die induzierte Spannung $U_{IND}$ des Gleichstrommotors 2 ermitteln und daraus gemäß obiger Abhängigkeit und bei Kenntnis der systemabhängigen Konstanten k die Angabe über die Drehzahl bestimmen.

Die für die Strommessung benötigte Erfassung der Messspannung über dem Messwiderstand 7 kann in einem in dem Steuergerät 6 integrierten Analog-/Digitalwandler erfolgen. Die Auswertung der gemessenen Spannung und die Berechnungen der induzierten Spannung werden in dem Steuergerät 6 durchgeführt.

Zur Bestimmung des Stromgradienten bzw. der zeitlichen Ableitung des Stromverlaufs zu dem bestimmten dritten Zeitpunkt $t_0$ in dem zweiten Zeitfenster F2 können zwei zeitlich zueinander versetzte Strommessungen innerhalb des entsprechenden Zeitfensters vorgenommen werden. Die Zeitpunkte $t_0+\Delta t$ und $t_0-\Delta t$ der beiden Strommessungen können den bestimmten Zeitpunkt einschließen oder eine der beiden Strommessungen kann der Strommessung zu dem bestimmten dritten Zeitpunkt $t_0$ entsprechen. Die beiden so erhaltenen Stromwerte werden voneinander subtrahiert. Die Differenz stellt schon eine Angabe des Stromgradienten dar. Alternativ kann die Differenz der Stromwerte noch durch den zeitlichen Abstand zwischen beiden Strommessungen innerhalb des zweiten Zeitfensters F2 dividiert werden, insbesondere wenn vorgesehen ist, dass der zeitliche Abstand der beiden Strommessungen für verschiedene Messperioden variieren kann.

Auch andere Möglichkeiten, eine zeitliche Ableitung des Stromwerts bzw. der Angabe über den Strom zu bestimmen, wie beispielsweise mit Hilfe eines analogen Differenzierglieds, sind denkbar. Für die Genauigkeit der Messung ist es notwendig, dass der gemessene Stromgradient dem Stromgradienten zu dem bestimmten Zeitpunkt des Messens des Stromwertes zuordenbar ist. Vorzugsweise wird der Stromgradient für den bestimmten dritten Zeitpunkt bestimmt, zu dem der Stromwert innerhalb des zweiten Zeitfensters F2 bestimmt wird.

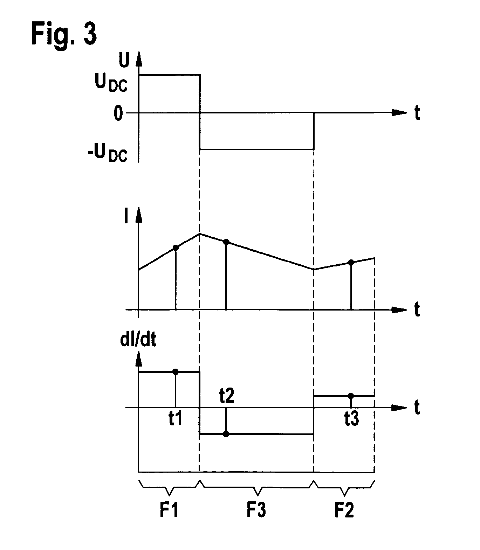

Eine zweite Auswertemöglichkeit sieht vor, gemäß einer weiteren Pulsweitenmodulation innerhalb einer oder mehrerer Pulsweitenmodulationsperioden T zunächst in dem ersten Zeitfenster F1 eine positive Versorgungsspannung $U_{DC}$ als Motorspannung an den Gleichstrommotor 2 anzulegen, anschließend bzw. zeitnah in einem dritten Zeitfenster F3 eine negative Versorgungsspannung $-U_{DC}$ als Motorspannung anzulegen und nachfolgend in dem zweiten Zeitfenster F2 die Spannung von 0Volt anzulegen. Die Verläufe der Motorspannung, des Motorstroms I und der Stromgradienten des Motorstroms können aus Figur 3 entnommen werden.

Es werden während des ersten Zeitfensters F1 des Anlegens der positiven Versorgungsspannung $U_{DC}$ als Motorspannung zu dem bestimmten ersten Zeitpunkt $t_1$ der Motorstrom bestimmt und der Stromgradient des Motorstroms zu dem bestimmten ersten Zeitpunkt $t_1$ ermittelt und während des dritten Zeitfensters F3 des Anlegens der negativen Versorgungsspannung $-U_{DC}$ als Motorspannung zu dem bestimmten zweiten Zeitpunkt $t_2$ der Motorstrom I bestimmt und der Stromgradient des Motorstroms I zu dem bestimmten zweiten Zeitpunkt $t_2$ ermittelt. Bei gleichen Versorgungsspannungen können die obigen Gleichungen gleichgesetzt werden und es ergibt sich:

$$U_{IND} = -R * (I_+ + I_-) / 2 - L * (dI_+ / dt + dI_- / dt) / 2.$$

Die Stromgradienten zu dem ersten und dem zweiten bestimmten Zeitpunkt $t_1$, $t_2$ können entsprechend dem oben beschriebenen Verfahren ermittelt werden.

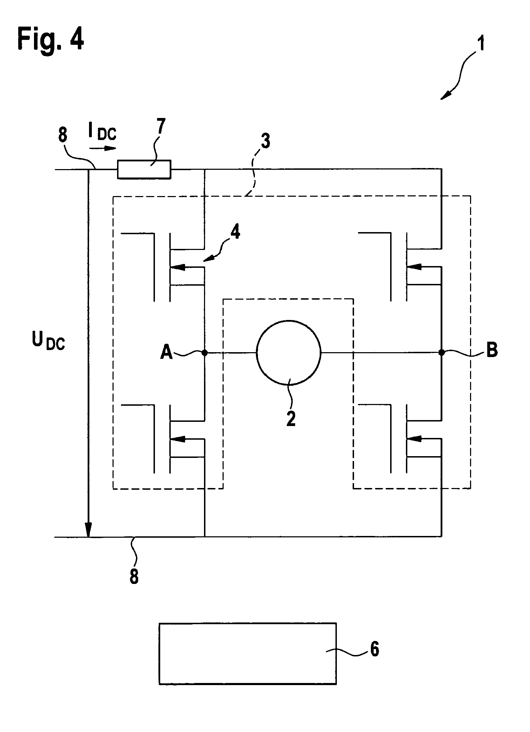

Alternativ kann die Strommessung auch als Messung des Versorgungsstroms durchgeführt werden, wie es in der Motoranordnung 1 der Figur 4 dargestellt ist. Beispielsweise kann dazu der Messwiderstand 7 in einer Versorgungsleitung 8 vor der Ansteuerschaltung 3 vorgesehen werden. In diesem Fall kann bei Anlegen der positiven bzw. negativen Versorgungsspannung $U_{DC}$, $-U_{DC}$ als Motorspannung über dem Gleichstrommotor 2 zwar der Betrag des Stroms gemessen werden, jedoch wird als Versorgungsstrom der Motorstrom in unterschiedlichen Vorzeichen gemessen. D.h. bei Durchschalten des ersten und des vierten Leistungstransistors 4 fließt ein Motorstrom in einer ersten Stromrichtung und bei Durchschalten des dritten und des zweiten Leistungstransistors 4 fließt der Motorstrom in einer entgegengesetzten Richtung. Bei der Messung des Versorgungsstroms als Motorstrom muss dies bei der Bestimmung der induzierten Spannung $U_{IND}$ berücksichtigt werden. Es gilt dann:

$$U_{IND} = -R * (I_{DC+} + -I_{DC-}) / 2 - L * (dI_{DC+} / dt - dI_{DC-} / dt) / 2,$$

wobei $I_{DC+}$ dem durch den Messwiderstand 7 fließende Strom bei Anlegen einer positiven Versorgungsspannung $U_{DC}$ als Motorspannung und $I_{DC-}$ dem der durch den Messwiderstand fließende Strom bei Anlegen einer negativen Versorgungsspannung $-U_{DC}$ als Motorspannung entsprechen.

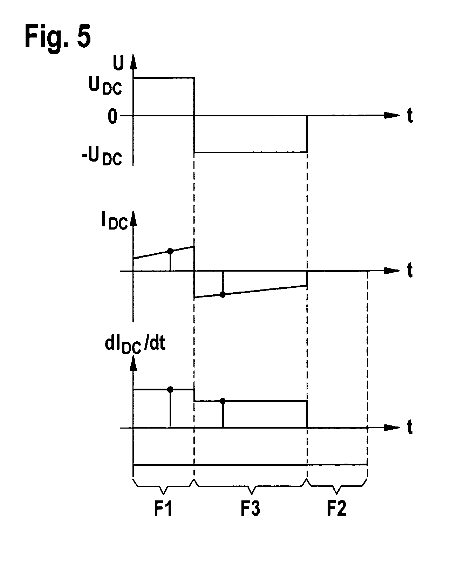

Die Verläufe der Spannung, des Versorgungsstroms sowie der Ableitungen des Versorgungsstroms sind in Figur 5 dargestellt. Wird der Versorgungsstrom als Motorstrom gemessen, ist eine Bestimmung der induzierten Spannung $U_{IND}$ bei Anlegen von 0V als Motorspannung nicht möglich. Somit kann bei dieser Ausführung die erste Auswertemöglichkeit nicht angewendet werden.

Bei der zweiten Auswertemöglichkeit ist die Pulsweitenmodulation grundsätzlich so vorzusehen, dass neben der positiven Versorgungsspannung $U_{DC}$ auch die negative Versorgungsspannung $-U_{DC}$ als Motorspannung während einer Pulsweitenmodulationsperiode oder während mehrerer Pulsweitenmodulationsperioden angelegt wird. In alternativen Ausführungsformen kann eine Strommessung auch in mehr als zwei Zeitfenstern mit jeweils konstanter Motorspannung durchgeführt werden, solange gewährleistet ist, dass die Summe der in den Zeitfenstern angelegten Motorspannungen konstant ist

Die Zuordnung einer Angabe zu einer induzierten Spannung des Gleichstrommotors zu einer tatsächlichen Drehzahl kann durchgeführt werden, wenn die Konstante k bekannt ist. Bei Inbetriebnahme des Gleichstrommotors kann dazu ein kalibrierungsverfahren durchgeführt werden, bei dem für bekannte Drehzahlen und Versorgungsspannungen die Ströme und Stromgradienten bestimmt werden, so dass man durch Auflösen eines so erhaltenen Gleichungssystems den Wert der Konstanten k ermitteln kann.

**Patentansprüche**

1. Verfahren zur Bestimmung einer Drehzahlangabe eines Gleichstrommotors (2), mit folgenden Schritten:

- Ansteuern des Gleichstrommotors (2) mit einer pulsweitenmodulierten Ansteuerung, wobei innerhalb einer Periodendauer der Pulsweitenmodulation mehrere Motorspannungen in aufeinander folgenden Zeitfenstern angelegt werden;

- jeweiliges Ermitteln einer Stromangabe, die den Strom durch den Gleichstrommotor (2) angibt, zu einem bestimmten Zeitpunkt in einem Zeitfenster, in dem die angelegte Motorspannung 0 Volt beträgt, oder zu jeweils einem bestimmten Zeitpunkt in mehreren der Zeitfenster, in denen die Summe der während der Zeitfenster angelegten Motorspannungen 0 Volt beträgt;

- jeweiliges Ermitteln einer Stromgradientenangabe, die den zeitlichen Stromgradienten zu den bestimmten Zeitpunkten in dem einen oder den mehreren Zeitfenstern angibt;

- Ermitteln einer Angabe zu einer induzierten Spannung als die Drehzahlangabe anhand der einen oder mehreren Stromangaben und der einen oder mehreren Stromgradientenangaben mit Hilfe von bereitgestellten Angaben über einen Innenwiderstand und einer Wicklungsinduktivität einer Läuferwicklung des Gleichstrommotors (2).

2. Verfahren nach Anspruch 1, wobei eine Stromangabe und eine Stromgradientenangabe in einem Zeitfenster ermittelt wird, in dem eine Motorspannung von 0 Volt angelegt ist.

3. Verfahren nach Anspruch 1, wobei zwei Stromangaben und zwei Stromgradientenangaben in zwei verschiedenen Zeitfenstern ermittelt werden, wobei in einem ersten der Zeitfenster eine Motorspannung in Höhe einer Versorgungsspannung und in einem zweiten Zeitfenster eine Motorspannung in Höhe einer negativen Versorgungsspannung angelegt sind.

4. Vorrichtung zur Bestimmung einer Drehzahlangabe eines Gleichstrommotors (2), umfassend:

- den Gleichstrommotor (2);
- eine Treiberschaltung (4) zum Bereitstellen von Motorspannungen in aufeinander folgenden Zeitfenstern
- ein Steuergerät (6) zum Ansteuern der Treiberschaltung (4) mit einer pulsweitenmodulierten Ansteuerung, so dass innerhalb einer Periodendauer der Pulsweitenmodulation mehrere Motorspannungen in aufeinander folgenden Zeitfenstern angelegt werden;
- eine Einrichtung zum jeweiliges Ermitteln einer Stromangabe, die den Strom durch den Gleichstrommotor (2) angibt, zu einem bestimmten Zeitpunkt in einem Zeitfenster, in dem die angelegte Motorspannung 0 Volt beträgt, oder zu jeweils einem bestimmten Zeitpunkt in mehreren der Zeitfenster, in denen die Summe der während der Zeitfenster angelegten Motorspannungen 0 Volt beträgt;
- eine Einrichtung zum jeweiliges Ermitteln einer Stromgradientenangabe, die den Stromgradienten zu den bestimmten Zeitpunkten in dem einen oder den mehreren Zeitfenstern angibt;
- eine Einrichtung zum Ermitteln einer Angabe zu einer induzierten Spannung als eine Angabe zu der Drehzahl anhand der einen oder mehreren Stromangaben und der einen oder mehreren Stromgradientenangaben mit Hilfe von bereitgestellten Angaben über einen Innenwiderstand und einer Wicklungsinduktivität einer Läuferwicklung des Gleichstrommotors (2).

5. Vorrichtung nach Anspruch 4, wobei die Einrichtung zum jeweiliges Ermitteln einer Stromangabe ausgebildet ist, um die Stromangaben unmittelbar am Ausgang der Treiberschaltung oder am Eingang der Treiberschaltung zum Anlegen der Versorgungsspannung zu erfassen.

6. Computerprogrammprodukt, das ein Computerprogramm enthält, das, wenn es auf einer Datenverarbeitungseinheit ausgeführt wird, ein Verfahren nach einem der Ansprüche 1 bis 3 durchführt.

**Claims**

1. Method for determining an item of rotation speed information of a DC motor (2), comprising the following steps:

- actuating the DC motor (2) with pulse-width-modulated actuation, with a plurality of motor voltages being applied in successive time windows within a period duration of the pulse-width modulation;
- in each case ascertaining an item of current information, which indicates the current through the DC motor (2), at a specific time point in a time window in which the applied motor voltage is 0 volt, or at a respective specific time point in a plurality of the time windows in which the sum of the motor voltages which are applied during the time windows is 0 volt;
- in each case ascertaining an item of current gradient information, which indicates the current gradient with respect to time at the specific time points in the one or more time windows;
- ascertaining an item of information relating to an induced voltage as the item of rotation speed information on the basis of the one or more items of current information and the one or more items of current gradient information with the aid of provided information about an internal resistance and a winding inductance of a rotor winding of the DC motor (2).

**2.** Method according to Claim 1, with an item of current information and an item of current gradient information being ascertained in a time window in which a motor voltage of 0 volt is applied.

**3.** Method according to Claim 1, with two items of current information and two items of current gradient information being ascertained in two different time windows, with a motor voltage which is equal to a supply voltage being applied in a first of the time windows and a motor voltage which is equal to a negative supply voltage being applied in a second time window.

**4.** Apparatus for determining an item of rotation speed information of a DC motor (2), comprising:

- the DC motor (2);
- a driver circuit (4) for providing motor voltages in successive time windows;
- a controller (6) for actuating the driver circuit (4) with pulse-width-modulated actuation, so that a plurality of motor voltages are applied in successive time windows within a period duration of the pulse-width modulation;
- a device for in each case ascertaining an item of current information, which indicates the current through the DC motor (2), at a specific time point in a time window in which the applied motor voltage is 0 volt, or at a respective specific time point in a plurality of the time windows in which the sum of the motor voltages which are applied during the time windows is 0 volt;
- a device for in each case ascertaining an item of current gradient information, which indicates the current gradient at the specific time points in the one or more time windows;
- a device for ascertaining an item of information relating to an induced voltage as an item of information relating to the rotation speed on the basis of the one or more items of current information and the one or more items of current gradient information with the aid of provided information about an internal resistance and a winding inductance of a rotor winding of the DC motor (2).

**5.** Apparatus according to Claim 4, with the device for in each case ascertaining an item of current information being designed to detect the current information directly at the output of the driver circuit or at the input of the driver circuit for applying the supply voltage.

**6.** Computer program product which contains a computer program which, when it is run on a data-processing unit, carries out a method according to one of Claims 1 to 3.

**Revendications**

**1.** Procédé de détermination d'une donnée de vitesse de rotation d'un moteur (2) à courant continu, le procédé comportant les étapes suivantes :

- commande du moteur (2) à courant continu par modulation de la largeur d'impulsions, plusieurs tensions du moteur étant appliquées dans des fenêtres temporelles successives au cours de la durée d'une période de la modulation de la largeur d'impulsions,
- détermination d'une donnée de courant qui indique le courant qui traverse le moteur (2) à courant continu à un instant déterminé dans une fenêtre temporelle, instant auquel la tension appliquée sur le moteur vaut 0 volt, ou à des instants définis de plusieurs fenêtres temporelles, auxquels la somme des tensions appliquées sur le moteur pendant la fenêtre temporelle est de 0 volt,
- détermination d'une donnée de gradient de courant qui indique le gradient temporel de courant aux instants définis de la ou des fenêtres temporelles et
- détermination d'une donnée concernant une tension induite en tant que donnée de vitesse de rotation à l'aide de la ou des données de courant et de la ou des données de gradient de courant à l'aide de données préparées concernant une résistance interne et une inductance d'un enroulement d'induit du moteur (2) à courant continu.

**2.** Procédé selon la revendication 1, dans lequel une donnée de courant et une donnée de gradient de courant sont déterminées au cours d'une fenêtre temporelle dans laquelle une tension appliquée sur le moteur est de 0 volt.

3. Procédé selon la revendication 1, dans lequel deux données de courant et deux données de gradient de courant sont déterminées dans deux fenêtres temporelles différentes, une tension du moteur étant appliquée au niveau d'une tension d'alimentation dans une des fenêtres temporelles et une tension du moteur au niveau d'une tension négative d'alimentation étant appliquée dans une deuxième fenêtre temporelle.

4. Dispositif de détermination d'une donnée de vitesse de rotation d'un moteur (2) à courant continu, le dispositif comportant :

   - le moteur (2) à courant continu,
   - un circuit pilote (4) qui délivre des tensions appliquées sur le moteur dans des fenêtres temporelles successives,
   - un appareil de commande (6) qui commande le circuit pilote (4) par modulation de la largeur d'impulsions de telle sorte que plusieurs tensions soient appliquées sur le moteur dans des fenêtres temporelles successives au cours de la durée d'une période de la modulation de la largeur d'impulsions,
   - un dispositif de détermination d'une donnée de courant qui indique le courant qui traverse le moteur (2) à courant continu à un instant donné d'une fenêtre temporelle auquel la tension appliquée sur le moteur est de 0 volt ou à des instants définis de plusieurs fenêtres temporelles auxquels la somme des tensions appliquées sur le moteur pendant la fenêtre temporelle est de 0 volt,
   - un dispositif de détermination d'une donnée de gradient de courant qui indique le gradient de courant aux instants définis de la ou les fenêtres temporelles,
   - un dispositif de détermination d'une donnée concernant une tension induite en tant que donnée concernant la vitesse de rotation, à l'aide de la ou des données de courant et de la ou des données de gradient de courant sur base de données préparées concernant la résistance interne et l'inductance d'un enroulement d'induit du moteur (2) à courant continu.

5. Dispositif selon la revendication 4, le dispositif étant configuré pour déterminer une donnée de courant pour saisir les données de courant directement à la sortie du circuit pilote ou à l'entrée du circuit pilote qui applique la tension d'alimentation.

6. Produit de programme informatique qui contient un programme informatique qui, lorsqu'il est exécuté sur une unité de traitement de données, exécute un procédé selon l'une des revendications 1 à 3.

# Fig. 1

**Fig. 2**

# Fig. 3

# Fig. 4

EP 2 284 544 B1

# Fig. 5

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2004173360 A
- EP 1873901 A2